# EUROPÄISCHE PATENTANMELDUNG

(11) **EP 1 486 389 A2**
(43) Veröffentlichungstag der Anmeldung: **15.12.2004**
(21) Anmeldenummer: 04005090.8
(22) Anmeldetag: 04.03.2004
(51) Int. Cl.: B60S 1/34

(54) **Vorrichtung mit einem Befestigungsteil eines Wischarms**

(30) Priorität: 11.06.2003 DE 10326256
(71) Anmelder: ROBERT BOSCH GMBH, 70442 Stuttgart (DE)
(72) Erfinder: Weiler, Michael, 363-9 Chungchongbuk-Do (KR); Zimmer, Joachim, 77880 Sasbach (DE)

(57) **Zusammenfassung**

Die Erfindung geht aus von einer Vorrichtung mit einem Befestigungsteil (10) eines Wischarms mit einer Antriebsdrehachse (12) und einem ersten Freiheitsgrad zur Einstellung desselben.

Es wird vorgeschlagen, dass durch den ersten Freiheitsgrad eine Auflagekraft des Wischarms einstellbar ist.

## Beschreibung

### Stand der Technik

Die Erfindung geht aus von einer Vorrichtung nach dem Oberbegriff des Anspruchs 1.

Aus der DE 199 29 914 A1 ist eine gattungsbildende Vorrichtung mit einem Befestigungsteil eines Wischarms mit einer Antriebsdrehachse und einer Schwenkachse bekannt, um die das Befestigungsteil zur Einstellung eines Anstellwinkels bei der Montage schwenkbar ist. Die Schwenkachse verläuft parallel zu einer Längsrichtung eines Wischblatts und parallel zur Längserstreckung des Befestigungsteils.

### Vorteile der Erfindung

Die Erfindung geht aus von einer Vorrichtung mit einem Befestigungsteil eines Wischarms mit einer Antriebsdrehachse und einem ersten Freiheitsgrad zur Einstellung desselben.

Es wird vorgeschlagen, dass durch den ersten Freiheitsgrad eine Auflagekraft des Wischarms einstellbar ist. Toleranzen, die sich auf die Auflagekraft auswirken, können vorteilhaft ausgeglichen werden. Zu geringe und zu hohe Auflagekräfte können vermieden und die Wischqualität kann gesteigert werden, wobei über den ersten Freiheitsgrad die Auflagekraft gestuft oder stufenlos einstellbar sein kann. Der erste Freiheitsgrad kann translatorisch oder rotatorisch oder eine Kombination von beidem sein. Vorteilhaft ist eine Befestigungsvorrichtung, in der die Auflagekraft mittels einer Stellvorrichtung und insbesondere ohne Hinzufügen oder Fortnehmen von Bauteilen geschieht.

Ist der erste Freiheitsgrad rotatorisch und durch eine Schwenkachse realisiert, die einen Winkel zur Längserstrekkung des Befestigungsteils und einen Winkel zur Antriebsdrehachse des Befestigungsteils einschließt, kann konstruktiv einfach ein großes Übersetzungsverhältnis erreicht werden. Ein rotatorischer Freiheitsgrad kann platzsparend realisiert werden und ist vorteilhaft mit einer flachen und aerodynamischen Bauweise vereinbar.

In einer weiteren Ausgestaltung der Erfindung wird vorgeschlagen, dass die Schwenkachse einen Winkel größer als 40° zur Längserstreckung und einen Winkel größer als 40° zur Antriebsdrehachse des Befestigungsteils aufweist. Verläuft insbesondere die Schwenkachse im Wesentlichen senkrecht zur Längserstreckung und im Wesentlichen senkrecht zur Antriebsdrehachse des Befestigungsteils, kann vorteilhaft mit einer kleinen Schwenkbewegung eine große Änderung der Auflagekraft bewirkt werden. Ferner kann gewährleistet werden, dass Einstellungen um die Schwenkachse weder die Lage der Längserstreckung des Wischarms noch den Anstellwinkel wesentlich verändern.

Obwohl eine ungeführte Einstellung des Befestigungsteils denkbar ist oder das Befestigungsteil einer indirekten Führung unterliegen könnte - etwa durch mit dem Befestigungsteil verbundene Bauteile, die ihrerseits geführt werden -, ist es besonders vorteilhaft, wenn die Vorrichtung eine direkte Führung aufweist. Dadurch können unerwünschte und unkontrollierte Veränderungen von Parametern vermieden werden, die unabhängig von der Auflagekraft sind, und die Montage kann vereinfacht werden.

Eine Führung mit Führungsflächen, entlang derer das Befestigungsteil bei seiner Schwenkbewegung um die Schwenkachse geführt wird, erweist sich als besonders wirkungsvoll. Dadurch ergibt sich eine zuverlässige Führung, die eine schnelle und präzise Montage ermöglichen kann. Solche Führungsflächen können technisch einfach, kostengünstig und ohne zusätzliche Bauteile mit Hilfe von Ausformungen am Befestigungsteil und korrespondierenden Formen am Einbauplatz des Befestigungsteils realisiert werden.

In einer weiteren Ausgestaltung der Erfindung weist das Befestigungsteil im Bereich der Schwenkachse ein im Wesentlichen in Richtung der Längserstreckung ausgerichtetes Langloch auf. Dieses ist eine technisch besonders einfache Art der Führung, die insbesondere hilft, Verschiebungen des Befestigungsteils in einer Richtung senkrecht zur Längsachse des Langlochs zu vermeiden.

Die eventuell zunächst von Hand eingestellte Position des Befestigungsteils sollte sich bei ihrer Fixierung durch Verspannen oder Verschrauben nicht wesentlich ändern. Besonders vorteilhaft ist daher eine Ausgestaltung der Erfindung, in der sich um das Langloch herum eine um die Schwenkachse gekrümmte Führungsfläche erstreckt. Dadurch kann ein Verspannen des Befestigungsteils gegen eine Anlagefläche in vielen verschiedenen Lagen ermöglicht werden. Obwohl prinzipiell viele Formen dieser Flächen denkbar sind, sind Flächen, die einen Teil der Oberfläche eines Zylinders oder einer Kugel darstellen, besonders vorteilhaft. Durch solche Führungsflächen kann durch eine entsprechende Negativform eine große, vorteilhaft vom Schwenkwinkel unabhängige Auflagefläche erreicht werden. Gleiches gilt für weitere Flächenformen, die zumindest in einem Teil mit der Oberfläche eines Körpers mit Rotationssymmetrie um die Schwenkachse zusammenfallen. Weisen die Führungsflächen raue, gerillte und/oder genoppte Oberflächenstrukturen auf, kann ein einen Kraftschluss vorteilhaft unterstützender Formschluss erreicht werden.

Eine weitere Vereinfachung der Einstellung der Auflagekraft bietet eine Ausgestaltung der Erfindung, in der die Vorrichtung Anschlagflächen zur Begrenzung der Schwenkbewegung des Befestigungsteils auf einen zulässigen Bereich aufweist. Einstellungen auf unzulässige Auflagekräfte können sicher vermieden werden. Für typische Wischeranlagen in Kraftfahrzeugen erreicht man ein gutes Wischergebnis bei einer Auflagekraft in einem Bereich von 10 N bis 30 N pro Meter Wischgummilänge. Bei einem Wischarm von 500 mm Länge ergibt sich also eine minimale Auflagekraft von 5 N und eine maximale Auflagekraft von 15 N. Die Differenz zwischen minimalem und maximalem Schwenkwinkel beträgt erfahrungsgemäß höchstens 10° bis 20° Grad und hängt von der Geometrie und den Materialeigenschaften des Wischarms ab. Eine einfache Realisierung der Anschlagflächen ist durch die Ränder des oben erwähnten Langlochs gegeben.

Neben der Auflagekraft beeinflussen auch der Anstellwinkel und andere Parameter die Wischqualität und den Komfort einer Wischeranlage. Daher wird vorgeschlagen, dass die Vorrichtung zumindest einen vom ersten Freiheitsgrad verschiedenen zweiten Freiheitsgrad aufweist. Insbesondere eine Schwenkachse, die im Wesentlichen parallel zur Längserstreckung des Befestigungsteils verläuft, kann genutzt werden, um den Anstellwinkel unabhängig von der Auflagekraft einzustellen. Eine Schwenkachse parallel zur Antriebsdrehachse kann zur Einstellung der Parkposition des Wischarms dienen.

Bei Wischarmen mit federelastischen Wischstangen bzw. bei gelenklosen Wischarmen wirken sich Toleranzen im Vergleich zu Wischarmen mit Gelenken verstärkt aus, wodurch die Möglichkeit zum Ausgleich der Toleranzen durch die erfindungsgemäße Lösung bei derartigen Wischarmen besonders vorteilhaft ist.

Ist die Wischstange in ihrer Längserstreckung durch eine Ausformung formschlüssig mit dem Befestigungsteil verbunden, kann mit wenig zusätzlichen Bauteilen eine besonders sichere Verbindung in Längsrichtung erreicht werden. Die Ausformung ist vorteilhaft an das Befestigungsteil angeformt, das im Vergleich zur elastisch verformbaren Wischstange in der Regel einfacher plastisch verformbar ist.

Zudem wird vorgeschlagen, dass das Befestigungsteil als Stanz-Biege-Blechteil ausgebildet ist, wodurch dieses besonders kostengünstig, mit geringem Gewicht herstellbar ist. Ferner kann vorteilhaft in einem Herstellprozess die Ausformung zur Sicherung der Wischstange in Längserstreckung einfach mit angeformt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer Wischeranlage mit einer Vorrichtung, die ein Befestigungsteil und eine Wischstange umfasst, schräg von oben,

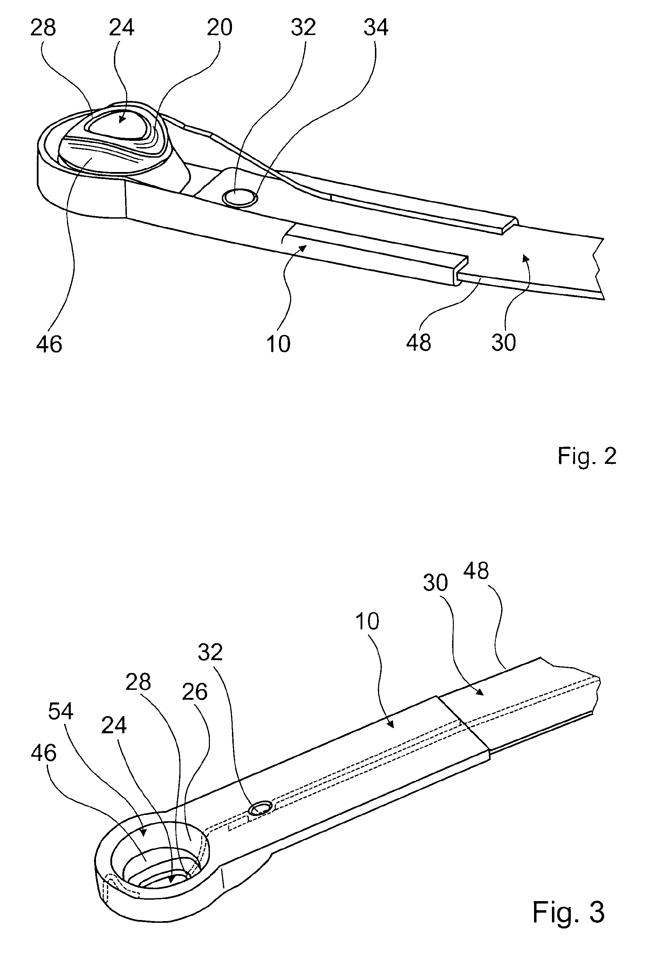

- Fig. 2: das Befestigungsteil und die Wischstange aus Fig. 1 schräg von unten,
- Fig. 3: das Befestigungsteil und die Wischstange aus Fig. 1 ohne Antriebswelle schräg von oben und

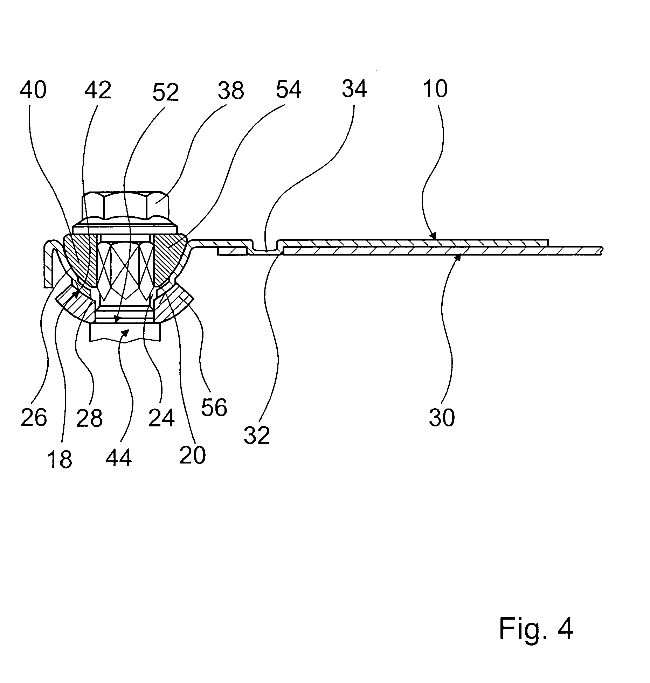

- Fig. 4: einen Längsschnitt durch die Vorrichtung aus Fig. 1.

### Beschreibung des Ausführungsbeispiels

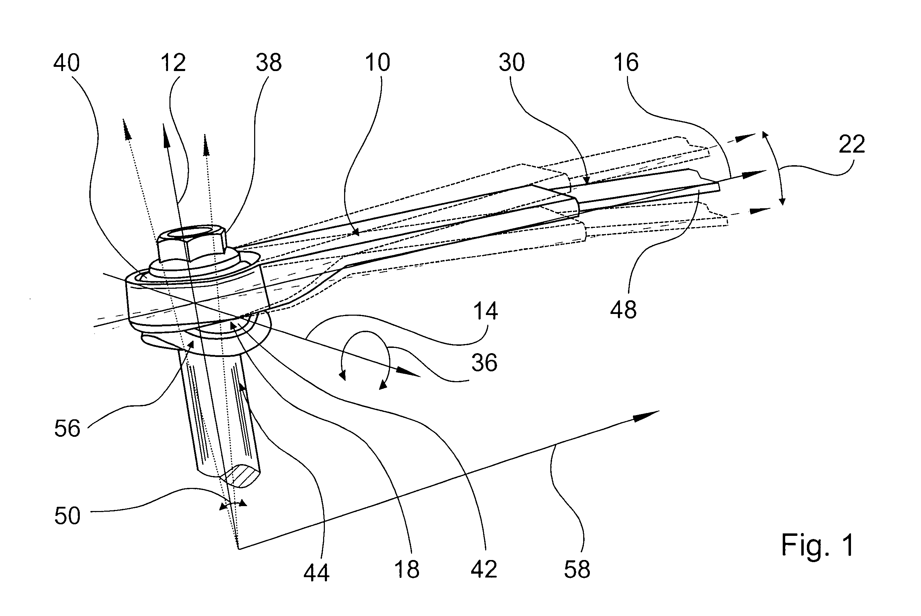

Fig. 1 zeigt schematisch einen Ausschnitt einer Wischeranlage mit einer Vorrichtung, die ein Befestigungsteil 10 und eine Wischstange 30 umfasst. Die Vorrichtung ist gekennzeichnet durch einen als Schwenkachse 14 ausgebildeten ersten Freiheitsgrad. Die Schwenkachse 14 steht im rechten Winkel einer Längserstreckung 16 und zu einer Antriebsdrehachse 12 des Befestigungsteils. Neben einer mit durchgezogenen Linien gezeichneten Einstellung sind in Fig. 1 zwei weitere Einstellungen mit gestrichelten Linien dargestellt. Durch eine Schwenkbewegung 22 des Befestigungsteils 10 um die Schwenkachse 14 kann eine Auflagekraft eines nicht näher dargestellten Wischblatts auf einer Windschutzscheibe eines Kraftfahrzeugs exakt eingestellt werden.

Die Wischeranlage weist eine Antriebswelle 44 auf, die an ihrem freien Ende mit einem Absatz 52, einem Profil mit polygonalem Querschnitt sowie einem nicht dargestellten Gewinde versehen ist. Auf das freie Ende der Antriebswelle 44 ist eine Stützscheibe 56 aufgefädelt, in die eine zum Befestigungsteil hin konkave, zylindrische Führungsfläche 42 einer Führung 18 angeformt ist. Die Stützscheibe 56 stützt sich am Absatz 52 ab und ist um die Antriebswelle 44 drehbar geführt. Die Führungsfläche 42 liegt zur Führung der Schwenkbewegung 22 um die Schwenkachse 14 an einer entsprechenden Führungsfläche 20 der Führung 18 am Befestigungsteil 10 an.

Das Befestigungsteil 10 weist eine sich in die von der Auflagefläche abgewandte Richtung aufweitende, kalottenförmige Vertiefung 54 auf, in die ein Klemmteil 40 eingesetzt ist.

Eine Schraubenmutter 38, die auf das Gewinde der Antriebswelle 44 aufgeschraubt ist, verspannt das Klemmteil 40, das Befestigungsteil 10 und die Stützscheibe 56 mit dem Absatz 52.

Um die Einstellung eines Schwenkwinkels 36 auf einen zulässigen Bereich von einer Größe von ca. 10° zu begrenzen, weist das Befestigungsteil 10 ein in Längsrichtung des Befestigungsteils 10 ausgerichtetes Langloch 24 auf, durch das zum Verspannen die Antriebswelle 44 gesteckt ist. In Längsrichtung weisende Ränder des Langlochs 24 bilden in beide Stellrichtungen mit der Antriebswelle 44 korrespondierende Anschlagflächen 28. Das Befestigungsteil 10 wird in seiner Schwenkbewegung 22 durch das Langloch 24 und durch die Führung 18 geführt.

Eine zur Stützscheibe 56 weisende zylindrische Führungsfläche 20 am Befestigungsteil 10 erstreckt sich um das Langloch 24, wobei ihre Zylinderachse mit der Schwenkachse 14 zusammenfällt. Ferner bildet eine Führungsfläche 26 der Vertiefung 54 des Befestigungsteils 10 und die Oberfläche des Klemmteils 40 einen Teil einer Oberfläche einer Kugel, deren Mittelpunkt auf der Schwenkachse 14 liegt. Dadurch kann das Befestigungsteil 10 vor dem Verspannen mit der Schraubenmutter 38 relativ zum Klemmteil 40 und zur Antriebswelle 44 gedreht werden. Diese Drehungen stellen einen zweiten Freiheitsgrad dar, der zur Einstellung der Parkposition des Wischblatts genutzt werden kann. Am Übergang zwischen der kugelförmigen Führungsfläche 26 und einer der zylinderförmigen Führungsfläche 20 gegenüberliegenden Fläche weist das Befestigungsteil 10 einen Absatz mit seitlichen Führungsflächen 46 auf. Mittels der Führungsflächen 46 und an der Stützscheibe 56 angeformter, nicht näher dargestellter Führungsflächen ist das Befestigungsteil 10 in seiner Schwenkbewegung seitlich geführt.

Die Antriebswelle 44 ist zur Einstellung um eine weitere Schwenkachse 58 schwenkbar gelagert, die die Einstellmöglichkeiten um einen dritten Freiheitsgrad zur Einstellung eines Anstellwinkels 50 ergänzt.

Am Befestigungsteil 10 ist gelenklos eine federelastische Wischstange 30 befestigt. Das Befestigungsteil 10 ist als Stanz-Biege-Blechteil ausgebildet, wobei die Führungsflächen 20, 26 am Befestigungsteil 10 tiefgezogen sind. Die Wischstange 30 ist in ihrer Längserstreckung 16 durch eine Ausnehmung 34 und eine an das Befestigungsteil 10 angeformte und in die Ausnehmung 34 eingreifende Ausformung 32 formschlüssig mit dem Befestigungsteil 10 verbunden. Ferner ist das Blech des Befestigungsteils 10 um Kanten 48 der als Bandfeder ausgeformten Wischstange 30 gecrimpt.

### Bezugszeichen

- 10: Befestigungsteil
- 12: Antriebsdrehachse
- 14: Schwenkachse
- 16: Längserstreckung
- 18: Führung
- 20: Führungsfläche
- 22: Schwenkbewegung
- 24: Langloch
- 26: Führungsfläche
- 28: Anschlagfläche
- 30: Wischstange
- 32: Ausformung
- 34: Ausnehmung
- 36: Schwenkwinkel
- 38: Schraubenmutter
- 40: Klemmteil
- 42: Führungsfläche
- 44: Antriebswelle
- 46: Führungsfläche
- 48: Kante
- 50: Anstellwinkel
- 52: Absatz
- 54: Vertiefung
- 56: Stützscheibe
- 58: Schwenkachse

## Patentansprüche

1. Vorrichtung mit einem Befestigungsteil (10) eines Wischarms mit einer Antriebsdrehachse (12) und einem ersten Freiheitsgrad zur Einstellung desselben, **dadurch gekennzeichnet, dass** durch den ersten Freiheitsgrad eine Auflagekraft des Wischarms einstellbar ist.

2. Vorrichtung nach Anspruch 1, **dadurch gekennzeichnet, dass** der erste Freiheitsgrad durch eine Schwenkachse (14) realisiert ist, die einen Winkel zur Längserstreckung (16) des Befestigungsteils (10) und einen Winkel zur Antriebsdrehachse (12) des Befestigungsteils (10) einschließt.

3. Vorrichtung nach Anspruch 2, **dadurch gekennzeichnet, dass** die Schwenkachse (14) einen Winkel größer als 40° zur Längserstreckung (16) und einen Winkel größer als 40° zur Antriebsdrehachse (12) des Befestigungsteils (10) aufweist.

4. Vorrichtung nach Anspruch 2 und 3, **dadurch gekennzeichnet, dass** die Schwenkachse (14) im Wesentlichen senkrecht zur Längserstreckung (16) und im Wesentlichen senkrecht zur Antriebsdrehachse (12) des Befestigungsteils (10) verläuft.

5. Vorrichtung nach einem der vorhergehenden Ansprüche, **gekennzeichnet durch** eine Führung (18), die das Befestigungsteil (10) bei seiner Einstellung führt.

6. Vorrichtung nach Anspruch 2 und 5, **dadurch gekennzeichnet, dass** die Führung (18) Führungsflächen (20, 42) aufweist, entlang derer das Befestigungsteil (10) bei seiner Schwenkbewegung (22) um die Schwenkachse (14) geführt ist.

7. Vorrichtung nach einem der vorhergehenden Ansprüche, **dadurch gekennzeichnet, dass** das Befestigungsteil (10) ein im Wesentlichen in Richtung der Längserstreckung (16) ausgerichtetes Langloch (24) aufweist.

8. Vorrichtung nach Anspruch 6, **dadurch gekennzeichnet, dass** sich um das Langloch (24) eine um die Schwenkachse gekrümmte Führungsfläche (20) erstreckt.

9. Vorrichtung nach Anspruch 2, **gekennzeichnet durch** Anschlagflächen (28) zur Begrenzung der Schwenkbewegung (22) des Befestigungsteils (10) auf einen zulässigen Bereich.

10. Vorrichtung nach einem der vorhergehenden Ansprüche, **gekennzeichnet durch** zumindest einen vom ersten Freiheitsgrad verschiedenen zweiten Freiheitsgrad.

11. Vorrichtung nach einem der vorhergehenden Ansprüche, **gekennzeichnet durch** eine gelenklos am Befestigungsteil (10) befestigte, federelastische Wischstange (30).

12. Vorrichtung nach Anspruch 11, **dadurch gekennzeichnet, dass** die Wischstange (30) in ihrer Längserstreckung (16) durch eine Ausformung (32) formschlüssig mit dem Befestigungsteil (10) verbunden ist.

13. Vorrichtung nach einem der vorhergehenden Ansprüche, **dadurch gekennzeichnet, dass** das Befestigungsteil (10) als Stanz-Biege-Blechteil ausgebildet ist.
